# EUROPÄISCHE PATENTSCHRIFT

(11) **EP 1 856 421 B1**
(45) Veröffentlichungstag und Bekanntmachung des Hinweises auf die Patenterteilung: **18.07.2012**
(21) Anmeldenummer: 06707188.6
(22) Anmeldetag: 22.02.2006
(51) Int. Cl.: F16C 32/06, F16C 29/02

(54) **AEROSTATISCHES LAGER MIT EINEM SCHWENKBAR ABGESTÜTZTEN LAGER FUSS UND KUPPLUNG MIT DEM LAGER**
AEROSTATIC BEARING COMPRISING A PIVOTALLY SUPPORTED BEARING FOOT AND BEARING COUPLING
PALIER A GAZ COMPRENANT UNE BASE DE PALIER A SOUTIEN PIVOTANT ET RACCORD AVEC LE PALIER

(30) Priorität: 24.02.2005 DE 102005008582
(43) Veröffentlichungstag der Anmeldung: 21.11.2007
(73) Patentinhaber: AeroLas GmbH Aerostatische Lager-Lasertechnik, 82008 Unterhaching (DE)
(72) Erfinder: MUTH, Michael, 81737 München (DE); SLOTTA, Georg, 85375 Neufahrn (DE); BRAND, Jan, 81539 München (DE)
(74) Vertreter: Schlimme, Wolfram
(86) Internationale Anmeldenummer: PCT/EP2006/001627
(87) Internationale Veröffentlichungsnummer: WO 2006/089741

(56) Entgegenhaltungen:
- DE-A1- 2 908 513
- GB-A- 2 391 498
- US-A- 4 073 549
- US-A- 4 851 026

## Beschreibung

Die Erfindung bezieht sich auf eine Kupplung zum drehfesten Verbinden zweier Wellen gemäß dem Oberbegriff des Patentanspruchs 1.

Aus der JP-63125820 A (Abstract) ist ein aerostatisches Lager mit einem Lagerfuß bekannt, der eine ebene Lagerfläche mit einer dazu senkrechten mittleren Lagerachse aufweist und der über ein Stützlager an einem Halter des Lagers mittels eines Festkörpergelenks kippbar gelagert ist.

Aus der WO 02/38975 A1 sind ein Verfahren und eine Vorrichtung zur Bildung eines Luftspalt in einem Luftlager bekannt, wobei eine der Lagerflächen von einer flexiblen Platte gebildet ist, die mittels eines elastischen Kissens an dem zu lagernden Körper angebracht ist. Das elastische Kissen ist mit einem Druckfluid gefüllt, wodurch es möglich ist, über die Wahl des Drucks im Kissen, der gegen den Gasdruck im Luftlager wirkt, die Stärke des Luftspalts, also den Abstand zwischen den beiden Lagerflächen, einzustellen.

Die US 5,100,271 A offenbart eine Werkzeugantriebseinheit zum translatorischen und rotatorischen Antrieb eines Werkzeugs mit einer kupplung nach dem Oberbegriff des Anspruchs 1. Der translatorische Antrieb des Werkzeugs erfolgt über eine Spindel, wobei der Drehkörper der Spindel von der das Werkzeug drehbar antreibenden Welle gebildet ist. Bei dieser Antriebseinheit ist es erforderlich, daß die Drehachse des für die Translationsbewegung zuständigen Spindelantriebs und des für die Rotationsbewegung zuständigen Drehantriebs exakt koaxial zueinander ausgerichtet sind.

Aus der US 5,009,554 A ist ein Bearbeitungswerkzeug bekannt, welches translatorisch und drehbar antreibbar ist. Der Antrieb in translatorischer Richtung erfolgt mittels einer ersten Antriebseinheit, die eine die Werkzeugantriebswelle umgebende Hülse in Drehbewegung versetzt, wobei die Hülse mit radial einwärts hervorstehenen Nockenfolgern versehen ist, die in einer wendelförmigen Nut laufen, welche auf einer die Werkzeugantriebswelle umgebenden Zwischenhülse vorgesehen sind. Die Werkzeugantriebswelle ist in der Zwischenhülse drehbar, aber axialfest gelagert. Der Rotationsantrieb des Werkzeugs erfolgt über eine Drehantriebseinrichtung, die unmittelbar auf die Werkzeugantriebswelle wirkt. Auch bei diesem Werkzeug müssen die Rotationsachsen der beiden Antriebe sowie der Werkzeugantriebswelle exakt koaxial verlaufen, was eine hohe Fertigungsgenauigkeit erfordert.

Die US 4,073,549 A offenbart ein hydrostatisches Lager, bei welchem eine zylindrische Sacklochbohrung in einem stationären Basisteil vorgesehen ist. Ein Lagerschuh ist kolbenartig in die zylindrische Sacklochbohrung eingesetzt und am Umfang gegen eine Dichtung in der Wandung des Sacklochs abgedichtet. Ein flexibles, stabartiges Sicherungselement ist mit seinem einen Ende im Zentrum des Sacklochs im Basisteil verankert und mit seinem anderen Ende im kolbenartigen Lagerschuh verankert. Auf diese Weise wird der Lagerschuh einerseits daran gehindert, aus dem Sackloch auszutreten und kann sich andererseits geringfügig um das Zentrum des stabartigen Sicherungselements neigen. Aus einer Druckfluidquelle wird Druckfluid in den Zylinderraum eingeleitet und dringt durch im Lagerschuh vorgesehene Kanäle an die Lagerfläche, wo sich ein bewegliches Teil auf dem so gebildeten Druckfluidkissen abstützt.

Bei einem aerostatischen Linearlager ist es zudem üblich, einen Lagerfuß mit seiner ebenen Lagerfläche entlang einer äußeren Lauffläche einer stationären linearen Stützbahn zu führen. Dabei strömt über die Lauffläche in einen engen Spalt zur Lagerfläche ein pneumatisches Druckmedium ein, so dass sich zwischen der Lagerkraft und der pneumatischen Druckkraft ein Gleichgewicht einstellt. Um die genaue Parallelität zwischen der Lauf- und der Lagerfläche zu sichern ist es ferner üblich, den Lagerfuß an einem Halter mittels eines mehrteiligen Kugelgelenks allseitig schwenkbar abzustützen. Der Lagerfuß wird unmittelbar an einen das Druckgas führenden Druckschlauch angeschlossen.

Im Stand der Technik besteht somit die Anforderung, eine hochexakte koaxiale Ausrichtung der jeweiligen Achsen eines axial und drehbar angetriebenen Werkzeugs, des Axialantriebs und des Drehantriebs, zu schaffen. Diese genaue koaxiale Ausrichtung erfordert eine hohe Fertigungs- und Montagegenauigkeit, was zu hohen Fertigungskosten führt.

Aufgabe der vorliegenden Erfindung ist es, eine gattungsgemäße Kupplung anzugeben, die es gestattet, zwei Wellen miteinander zu verbinden, auch wenn deren Achsen nicht exakt koaxial zueinander sind.

Diese Aufgabe wird durch die im Patentanspruch 1 angegebene Kupplung gelöst.

Die Kupplung weist ein aerostatisches Lager mit einem Lagerfuß auf, der frontseitig eine ebene Lagerfläche mit einer dazu senkrechten mittleren Lagerachse aufweist und der rückseitig über ein Stützlager an einem Halter des Lagers kippbar gelagert ist, wobei die beiden Wellen axial gegeneinander verschiebbar sind. Das in der Nähe der Lagerachse angeordnete Stützlager ist als Festkörpergelenk ausgebildet. Der als Mitnehmer ausgebildete Halter ist einer der beiden Wellen fest zugeordnet und die ebene Lagerfläche des Lagerfußes erstreckt sich parallel zur Drehachse. Die andere Welle weist eine die Lagerfläche überlappende und an diese angepasste Lauffläche auf und das Festkörpergelenk ist mit Abstand zur Drehachse der Welle angeordnet.

Die erfindungsgemäße kardanähnliche Kupplung ermöglicht die sichere und spielfreie Übertragung einer Drehbewegung zwischen den Wellen. Ein Winkelversatz zwischen den Achsen bleibt dabei weitgehend ohne Einfluss. Durch die exzentrische Anordnung des Festkörpergelenks mit Abstand zur Drehachse wird das Drehmoment über das Festkörpergelenk ohne Biegebelastung als Schubkraft übertragen. Der Lagerfuß stellt ein einfaches Übertragungselement dar, das sich durch die federnd kippbare Lagerung selbsttätig an der Lauffläche ausrichten kann, so dass die Wellen in Bezug auf die Übertragung der Drehbewegung gekoppelt, im Hinblick auf die anderen Freiheitsgrade aber entkoppelt sind. Das Festlager weist im Vergleich zum Kugelgelenk eine einfache Struktur auf und kann in einfacher Weise montiert werden. Es ist verschleiß- und spielfrei, was die genaue Positionierung des Halters beschleunigt. Das Festlager kann sehr schlank ausgebildet werden und eignet sich daher besonders für kleine Lager.

Vorteilhafte Weiterbildungen der Erfindung ergeben sich aus den in den Ansprüchen 2 bis 11 gekennzeichneten Merkmalen. Vorzugsweise ist eine der Wellen als axial unverschiebbare Antriebswelle ausgebildet, an der an einem Stirnende der Mitnehmer befestigt ist, der mit einem Schenkel in die Richtung der anderen Welle ragt und den Lagerfuß trägt, wobei die andere Welle als axial verschiebbare Pinole ausgebildet ist, die eine stirnseitig angeordnete, in die Richtung der Antriebwelle ragende Klaue aufweist, an der die Lauffläche ausgebildet ist.

Ist der Mitnehmer als separates Bauteil fest an der Antriebswelle montiert, ist es möglich,einen normalen elektrischen Antriebsmotor zu verwenden, der ohne genaue Fluchtung mit der Pinolenachse an einem gemeinsamen Gehäuse befestigt werden kann, so dass der Fertigungs- und Montageaufwand gering bleiben kann. Die Klaue kann einstückig an der als Sonderbauteil hergestellten Pinole ausgebildet sein.

Vorzugsweise weist der Mitnehmer eine auf das Ende der Antriebswelle aufgeschobene Muffe und an seinem freien Schenkelende einen Stützstift für den Lagerfuß aufweist, wobei der Lagerfuß in der Verschieberichtung zur Muffe einen freien Abstand aufweist und wobei die Biegefeder als zur Drehachse der Antriebswelle paralleler dünner Stab ausgebildet ist, der fest mit der Muffe und dem Lagerfuß verbunden ist.

Der als Biegefeder dienende drahtartige Stab und der Stützstift fixieren den Lagerfuß nachgiebig in seiner Groblage. Der Stab weist einen längeren ungeführten Abschnitt auf, so dass sich der einen Gleitschuh bildende Lagerfuß vollflächig an die Lauffläche anpassen kann. Der kurze Stift überträgt das Drehmoment des Drehantriebs auf den Gleitschuh und ist geringfügig verformbar, um eine geringe Winkelabweichung in der Achsrichtung zwischen der Gleitfläche und der Gegenfläche des Gleitschuhs auszugleichen. Eine derartige Kupplung bedarf daher keiner hohen Fertigungs- und Montagegenauigkeit.

Bevorzugt ist der geradlinige, im Querschnitt runde Stab mit zumindest einem seiner Enden in einer Bohrung der Muffe bzw. des Lagerfußes längsverstellbar festgeklemmt.

Weiter vorzugsweise ist die Kupplung Teil einer elektrischen Antriebseinheit mit einem Dreh-Hubantrieb für die luftgelagerte Pinole, die an ihrem anderen Ende Mittel zum Greifen eines positionierbaren Werkstücks aufweist.

Vorzugsweise weist die Pinole Mittel zum Befestigen eines dünnen koaxialen Hubstößels auf und die Antriebswelle ist als Hohlwelle ausgebildet, durch die der Hubstößel hindurchführbar ist.

Der kombinierte Dreh-Hubantrieb nach den Ansprüchen 5 und 6 nutzt die erfindungsgemäße Kupplung in besonders vorteilhafter Weise. Bei der Positionierung des Werkstücks wird eine hohe Genauigkeit gefordert, die vor allem mit Hilfe der aerostischen Lager der Pinole und der Kupplung gewährleistet wird, die das geringe Drehmoment sicher überträgt. Durch die Luftlagerung bleiben die Kupplungsflächen auch bei häufigen Hubbewegungen verschleißfrei. Am anderen Ende kann der schlanke Stößel mit einem Hubantrieb gekoppelt sein, der durch seine Biegsamkeit im Hinblick auf seine Achslage von der Pinole entkoppelt ist.

Bevorzugt weist das Festkörpergelenk eine zentrale Durchgangsbohrung für die Versorgung des Lagerfußes mit Druckgas auf.

Die Durchgangsbohrung ermöglicht es, die Lagerluft auf eine einfache Weise zuzuführen, ohne dass dabei die Lage des Lagerfußes durch einen angekoppelten Druckschlauch beeinflusst wird.

In einer bevorzugten Ausführungsform ist an den allseitig kippbaren Lagerfuß zusätzlich zum Festkörpergelenk außerhalb der Lagerachse eine Biegefeder angesetzt ist, deren Ansatzstelle senkrecht zur Lagerfläche auslenkbar und in der Umfangsrichtung des Lagerfußes nicht auslenkbar ist.

Die Biegefeder sichert den Lagerfuß reibungsfrei gegen Verdrehung um seine Lagerachse, so dass der Querschnitt des Festkörpergelenks sehr klein gehalten werden kann. Die Biegefeder kann sich mit sehr geringer Vorspannung der Kippstellung des Lagerfußes anpassen.

Vorzugsweise ist das Festkörpergelenk durch einen sich parallel zur Lagerachse erstreckenden Stützstift gebildet, der in Festlagern des Halters und des Lagerfußes verankert ist, und ein freier Abschnitt ist zwischen den Festlagern biegeelastisch ausgebildet.

Der Stützstift ist ein sehr einfaches Bauteil, dessen freier Gelenkquerschnitt verjüngt und an unterschiedliche Lagerverhältnisse angepasst werden kann. Eine zentrale Bohrung ermöglicht es in einfacher Weise, den Lagerfuß mit der Druckleitung zu verbinden.

Dabei ist es von Vorteil, wenn zumindest eines der Festlager eine Klemmbohrung im Halter oder im Lagerfuß aufweist, in der der zylindrische Stützstift längsverschiebbar eingesetzt und festgeklemmt ist.

Hierdurch wird der Stützstift sicher verankert und kann in einfacher Weise z.B. mittels einer Klemmschraube in einer geeigneten Verschiebestellung fixiert und an die jeweiligen Einbauverhältnisse angepasst werden.

Vorzugsweise ist der Lagerfuß mit Mitteln zum permanentmagnetischen Verspannen seiner Lagerfläche mit einer komplementären Lauffläche einer Führungsbahn versehen.

Die permanentmagnetische Vorspannung kann in ihrem Schwerpunkt auf die Lagerachse ausgerichtet werden. Dadurch stellt sich die Lagerfläche mit einem definierten Luftspalt genau parallel zur Lauffläche. Das Festkörpergelenk wird um die Magnetkraft entlastet und kann zur Erhöhung der Nachgiebigkeit im Querschnitt entsprechend verringert werden.

Dabei ermöglicht eine magnetische Anziehungskraft zwischen der Lagerfläche und der Lauffläche unter dem entgegenwirkenden Gasdruck eine genau parallele Ausrichtung mit einem definierten Luftspalt, so dass die Drehstellung der einen Welle spielfrei auf die andere übertragen werden kann. Eine solche Kupplung eignet sich besonders für die Übertragung von geringen Drehmomenten z.B. bei der Drehpositionierung von Montageteilen oder bei einem hochdrehenden Bearbeitungswerkzeug, z.B. zum Bohren von Leiterplatten.

Eine bevorzugte Anwendung der erfindungsgemäßen Kupplung erfolgt gemäß Anspruch 12 in einer Antriebseinheit mit einem Dreh-Hubantrieb, insbesondere zum Handhaben von elektrischen Bauelementen, mit einem Gehäuse, einer von einem Drehantrieb rotatorisch und von einem Linearantrieb translatorisch betätigten Pinole, die im Gehäuse luftgelagert ist, wobei die Pinole mit einem Läufer des Linearantriebs über einen Hubstößel verbunden ist. Eine Antriebswelle des Drehantriebs ist dabei mit der Pinole über die erfindungsgemäße Kupplung verbunden.
- **Fig. 1**: einen Schnitt durch ein bekanntes aerostatisches Lager mit einer stationären Laufbahn für das Lager,
- **Fig. 2**: einen senkrechten Längsschnitt durch eine erfindungsgemäße Antriebseinheit mit einer erfindungsgemäßen Kupplung
- **Fig. 3**: einen anderen Längsschnitt durch einen Teil der Antriebseinheit nach Fig. 2 ohne das Gehäuse,
- **Fig. 4**: eine vergrößerte perspektivische Ansicht der Teile nach Fig. 3,

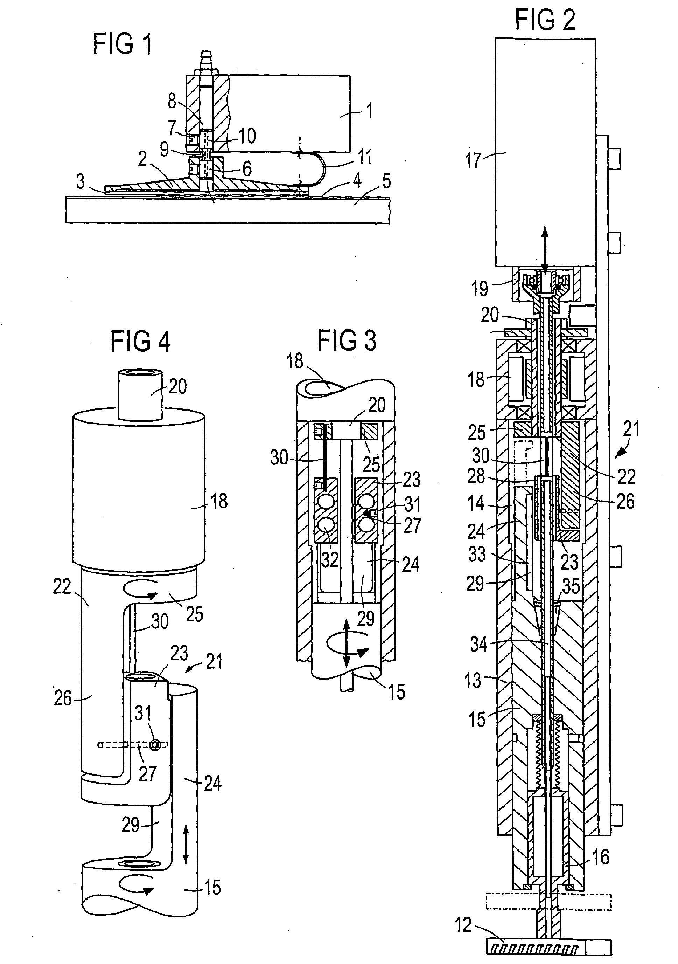

Nach Fig. 1, die keine Ausführung der Erfindung zeigt, bildet ein mobiler Halter 1 mit einem Lagerfuß 2 ein aerostatisches Lager, das mit einer ebenen Lagerfläche 3 des Lagerfußes auf einer ebenen Lauffläche 4 einer stationären linearen Führungsbahn 5 verschiebbar abgestützt ist. Der Lagerfuß 2 ist am Halter 1 im Bereich einer zur Lagerfläche 3 senkrechten Lagerachse mittels eines zylindrischen, in seinem Mittelabschnitt verjüngten Stützstiftes 6 gehalten, der an seinen Enden mittels Schrauben 7 in Klemmbohrungen 8 des Halters 1 bzw. des Lagerfußes 2 befestigt ist. Der kurze, stark verjüngte Mittelabschnitt des Stützstiftes 6 ist ungeführt und bildet ein Festkörpergelenk 9, das eine geringe Taumelbewegung des Lagerfußes 2 mit geringer Auslenkkraft erlaubt. Der Stützstift 6 weist eine axiale Durchgangsbohrung 10 auf, durch die die Lagerluft vom Halter 1 in den Lagerfuß 2 geleitet und dort auf die der Lauffläche 4 zugewandte Lagerfläche 3 des Lagerfußes 2 verteilt werden kann. Alternativ kann die Druckluft für das aerostatische Lager auch durch die Führungsbahn 5 auf die Lauffläche 4 geleitet werden.

Der allseitig schwenkbare Lagerfuß 2 ist zusätzlich zum Festkörpergelenk 9 in seinem Randbereich mit einem senkrecht zur Lagerfläche 3 auslenkbaren Ende einer u-förmig gebogenen Biegefeder 11 verbunden, die mit ihrem anderen Ende am Halter 1 befestigt ist. Die als dünne Blattfeder ausgebildete Biegefeder 11 weist in ihrer Normallage keine Spannung auf, so dass eine geringe Auslenkung im Vergleich zur Lagerkraft nur eine sehr geringe Federkraft erzeugt. Die u-förmig gebogene Biegefeder 11 verhindert aber aufgrund ihrer seitlichen Steifigkeit ein Verdrehen des Lagerfußes 2 um die Lagerachse.

Nach den Fig. 2, 3 und 4 weist eine Antriebseinheit zum Handhaben von elektrischen Bauelementen 12 ein Gehäuse 13 mit einer senkrechten Bohrung 14 für eine im wesentlichen zylindrische, axial verschiebbare und drehbare Pinole 15 mit einem Sauggreifer 16 für das Bauelement 1 auf, wobei hier die Pinole 15 in einer unteren Hubstellung dargestellt ist.

Die Pinole 15 wird durch einen Linearantrieb 17 in Form eines elektrischen Linearmotors und durch einen Drehantrieb 18 in Form eines Elektromotors betätigt, der auf einer Oberseite des Gehäuses 13 über der Bohrung 14 annähernd koaxial mit dieser befestigt ist. Der Linearantrieb 17 befindet sich oberhalb des Drehantriebs 18 und ist mit seinem Stationärteil fest mit dem Gehäuse 13 verbunden. Ein dem Drehantrieb 18 zugewandter Läufer 19 des Linearantriebs 17 ist in der Achsrichtung der Bohrung 14 verschiebbar und annähernd koaxial mit dem Drehantrieb 18 angeordnet. Dieser weist eine drehbare hohle Antriebswelle 20 auf, die mit der im Gehäuse 13 luftgelagerten Pinole 15 über eine Kupplung 21 verbunden ist, die aus einem Mitnehmer 22, einem anderen Lagerfuß 23 und einer seitlichen Klaue 24 der Pinole 15 besteht.

Der als der Halter dienende Mitnehmer 22 ist mit einer scheibenartigen Muffe 25 auf der Antriebswelle 20 befestigt und ragt von dort mit einem segmentartigen Schenkel 26 in die Richtung der Pinole 15. Der Lagerfuß 23 ist am Schenkel 26 mittels eines anderen, ein anderes Festköpergelenk bildenden Stützstiftes 27 gehalten, der sich senkrecht zur Bohrungsachse erstreckt. Eine andere Lagerfläche 28 verläuft parallel zur Bohrungsachse. Die an der Pinole 15 ausgebildete Klaue 24 ragt in die Richtung der Antriebswelle 20 und überlappt den Schenkel 26 mit einer anderen, zur Bohrungsachse parallelen Lauffläche 29. Die Biegefeder ist hier durch einen zur Bohrungsachse parallelen biegsamen und tordierbaren Stab 30 gebildet, dessen Enden an der Muffe 25 bzw. am Lagerfuß 23 befestigt sind. Der drahtartige Stab 30 und der Stützstift 27 fixieren den Lagerfuß 23 kardanartig nachgiebig in seiner Groblage. Der an seinen Enden längsverstellbar festgeklemmte Stab 30 weist einen längeren ungeführten biegeelastischen Abschnitt auf.

Der kurze, mittels einer anderen Schraube 31 am Lagerfuß 23 einstellbar festgeklemmte Stützstift 27 überträgt das Drehmoment des Drehantriebs 18 auf den Lagerfuß 23 und ist geringfügig verformbar. Die Lauffläche 29 der Klaue 24 liegt der Lagerfläche 28 des Lagerfußes 23 mit einem schmalen definierten Luftlagerspalt parallel gegenüber. Der Lagerfuß 23 weist Permanentmagnete 32 auf, die den Lagerfuß 23 gegen ein eingesetztes Eisenblech 33 der Klaue 24 und gegen den im Spalt herrschenden Luftdruck spannen. Durch die Nachgiebigkeit des Stabs 30 und des Stützstifts 27 stellt sich die Lagerfläche 30 des Lagerfußes 23 zur Lauffläche 29 genau parallel, so dass der Lagerfuß 23 relativ zur Klaue 24 ohne Lagerspiel axial verschiebbar ist. Auf diese Weise wird die Drehstellung der Antriebswelle 20 exakt auf die Pinole 15 übertragen, ohne dass dabei die beiden Drehachsen genau übereinstimmen müssen.

Der Läufer 19 des Linearantriebs 17 ist über einen dünnen rohrförmigen Hubstößel 34 durch die hohle Antriebswelle 20 und den Lagerfuß hindurch mit der Pinole 15 verbunden, an der er mittels einer Klemmverbindung 35 in der Art eines Spannkonus verankert ist. Die Hubbewegung des Läufers 19 wird dabei spielfrei auf die Pinole 4 übertragen. Der Sauggreifer 16 für das Bauelement 1 ist an dem der Kupplung 21 gegenüberliegenden unteren Ende der Pinole 15 axial federnd gelagert.

Die in dieser Anmeldung als Luftlager bezeichneten aerostatischen Lager können statt mit Luft auch mit anderen geeigneten Druckgasen versorgt werden.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen.

Bezugszeichen in den Ansprüchen, der Beschreibung und den Zeichnungen dienen lediglich dem besseren Verständnis der Erfindung und sollen den Schutzumfang nicht einschränken.

### Bezugszeichen

- 1: Halter
- 2: Lagerfuß
- 3: Lagerfläche
- 4: Lauffläche
- 5: Führungsbahn
- 6: Stützstift
- 7: Schraube
- 8: Klemmbohrung
- 9: Festkörpergelenk
- 10: Durchgangsbohrung
- 11: Biegefeder
- 12: Bauelement
- 13: Gehäuse
- 14: Bohrung
- 15: Pinole
- 16: Sauggreifer
- 17: Linearantrieb
- 18: Drehantrieb
- 19: Läufer
- 20: Antriebswelle
- 21: Kupplung
- 22: Mitnehmer
- 23: Lagerfuß
- 24: Klaue
- 25: Muffe
- 26: Schenkel
- 27: Stützstift
- 28: Lagerfläche
- 29: Lauffläche
- 30: Stab
- 31: Schraube
- 32: Permanentmagnet
- 33: Eisenblech
- 34: Hubstößel
- 35: Klemmverbindung

## Patentansprüche

1. Kupplung mit zwei annähernd koaxialen Wellen, die mittels der Kupplung drehfest miteinander verbunden und axial gegeneinander verschiebbar sind, wobei die Kupplung ein aerostatisches Lager mit einem Lagerfuß (23) aufweist, der frontseitig eine ebene Lagerfläche (28) mit einer dazu senkrechten mittleren Lagerachse aufweist und der rückseitig über ein Stützlager an einem Halter (22) des Lagers kippbar gelagert ist,
**dadurch gekennzeichnet,**
- **dass** das in der Nähe der Lagerachse angeordnete Stützlager als Festkörpergelenk (27) ausgebildet ist,
- **dass** der als Mitnehmer (22) ausgebildete Halter einer der beiden Wellen fest zugeordnet ist,
- **dass** sich die ebene Lagerfläche (28) des Lagerfußes (23) parallel zur Drehachse erstreckt,
- **dass** die andere Welle eine die Lagerfläche (28) überlappende und an diese angepasste Lauffläche (29) aufweist und
- **dass** das Festkörpergelenk mit Abstand zur Drehachse der Welle angeordnet ist.

2. Kupplung nach Anspruch 1,
**dadurch gekennzeichnet ,**
**dass** eine der Wellen als axial unverschiebbare Antriebswelle (20) ausgebildet ist, an der an einem Stirnende der Mitnehmer (22) befestigt ist, der mit einem Schenkel (26) in die Richtung der anderen Welle ragt und den Lagerfuß (23) trägt, dass die andere Welle als axial verschiebbare Pinole (15) ausgebildet ist, die eine stirnseitig angeordnete, in die Richtung der Antriebwelle (20) ragende Klaue (24) aufweist, an der die Lauffläche (29) ausgebildet ist.

3. Kupplung nach Anspruch 2,
**dadurch gekennzeichnet ,**
**dass** der Mitnehmer (22) eine auf das Ende der Antriebswelle (20) aufgeschobene Muffe (25) und an seinem freien Schenkelende einen Stützstift (27) für den Lagerfuß (23) aufweist, dass der Lagerfuß (23) in der Verschieberichtung zur Muffe (25) einen freien Abstand aufweist und dass die Biegefeder als zur Drehachse der Antriebswelle (20) paralleler dünner Stab (30) ausgebildet ist, der fest mit der Muffe (25) und dem Lagerfuß (23) verbunden ist.

4. Kupplung nach Anspruch 3,
**dadurch gekennzeichnet ,**
**dass** der geradlinige, im Querschnitt runde Stab (30) mit zumindest einem seiner Enden in einer Bohrung der Muffe (25) bzw. des Lagerfußes (23) längsverstellbar festgeklemmt ist.

5. Kupplung nach einem der Ansprüche 1 bis 4,
**dadurch gekennzeichnet ,**
**dass** die Kupplung (21) Teil einer elektrischen Antriebseinheit mit einem Dreh-Hubantrieb für die luftgelagerte Pinole (15) ist, die an ihrem anderen Ende Mittel zum Greifen eines positionierbaren Werkstücks aufweist.

6. Kupplung nach Anspruch 5,
**dadurch gekennzeichnet ,**
**dass** die Pinole (15) Mittel zum Befestigen eines dünnen koaxialen Hubstößels (15) aufweist und dass die Antriebswelle (20) als Hohlwelle ausgebildet ist, durch die der Hubstößel (34) hindurchführbar ist.

7. Kupplung nach einem der vorhergehenden Ansprüche,
**dadurch gekennzeichnet ,**
**dass** das Festkörpergelenk (27) eine zentrale Durchgangsbohrung für die Versorgung des Lagerfußes (23) mit Druckgas aufweist.

8. Kupplung nach einem der vorhergehenden Ansprüche,
**dadurch gekennzeichnet ,**
**dass** an den allseitig kippbaren Lagerfuß (23) zusätzlich zum Festkörpergelenk (27) außerhalb der Lagerachse eine Biegefeder (30) angesetzt ist, deren Ansatzstelle senkrecht zur Lagerfläche (28) auslenkbar und in der Umfangsrichtung des Lagerfußes (23) nicht auslenkbar ist.

9. Kupplung nach einem der vorhergehenden Ansprüche,
**dadurch gekennzeichnet ,**
**dass** das Festkörpergelenk durch einen sich parallel zur Lagerachse erstreckenden Stützstift (27) gebildet ist, der in Festlagern des Halters (22) und des Lagerfußes (23) verankert ist und dass ein freier Abschnitt zwischen den Festlagern biegeelastisch ausgebildet ist.

10. Kupplung nach Anspruch 9,
**dadurch gekennzeichnet ,**
**dass** zumindest eines der Festlager eine Klemmbohrung im Halter (22) oder im Lagerfuß (23) aufweist, in der der zylindrische Stützstift (27) längsverschiebbar eingesetzt und festgeklemmt ist.

11. Kupplung nach Anspruch 9,
**dadurch gekennzeichnet ,**
**dass** der Lagerfuß (23) mit Mitteln zum permanentmagnetischen Verspannen seiner Lagerfläche (28) mit einer komplementären Lauffläche (29) einer Führungsbahn versehen ist.

12. Antriebseinheit mit einem Dreh-Hubantrieb, insbesondere zum Handhaben von elektrischen Bauelementen, mit
- einem Gehäuse (13),
- einer von einem Drehantrieb (18) rotatorisch und von einem Linearantrieb (17) translatorisch betätigten Pinole (15), die im Gehäuse (13) luftgelagert ist, wobei die Pinole (15) mit einem Läufer (19) des Linearantriebs (17) über einen Hubstößel (34) verbunden ist,
**dadurch gekennzeichnet ,**
- **daß** eine Antriebswelle (20) des Drehantriebs (18) mit der Pinole (15) über eine Kupplung (21) verbunden ist, die gemäß einem der vorhergehenden Ansprüche ausgebildet ist.

## Claims

1. Coupling with two approximately coaxial shafts, which by means of the coupling are non-rotatably connected to one another and are axially displaceable relative to one another, wherein the coupling has an aerostatic bearing with a bearing foot (23), which on the front side has a plane bearing surface (28) with a central bearing axis perpendicular thereto and which on the rear side is tiltably mounted on a holder (22) of the bearing by means of a support bearing,
**characterised in that**
• the support bearing arranged in the vicinity of the bearing axis is configured as a flexure joint (27),
• that the holder configured as an entrainment member (22) is fixedly associated with one of the two shafts,
• that the plane bearing surface (28) of the bearing foot (23) extends parallel to the rotational axis,
• that the other shaft has a running surface (29), which overlaps the bearing surface (28) and is adapted thereto, and
• that the flexure joint is spaced from the rotational axis of the shaft.

2. Coupling according to claim 1,
**characterised in that** one of the shafts is configured as an axially non-displaceable drive shaft (20), to which the entrainment member (22), which with one leg (26) projects in the direction of the other shaft and bears the bearing foot (23), is fastened at a face end, that the other shaft is configured as an axially displaceable sleeve (15), which has a claw (24), which is arranged on the face side and projects in the direction of the drive shaft (20) and on which the running surface (29) is formed.

3. Coupling according to claim 2,
**characterised in that** the entrainment member (22) has a fitting (25) attached to the end of the drive shaft (20) and has a support pin (27) for the bearing foot (23) on its free leg end, that the bearing foot (23) has a free spacing from the fitting (25) in the direction of displacement and that the spring is configured as a thin rod (30) parallel to the rotational axis of the drive shaft (20) and fixedly connected to the fitting (25) and the bearing foot (23).

4. Coupling according to claim 3,
**characterised in that** the rectilinear rod (30) with a round cross-section is clamped at at least one of its ends in a bore of the fitting (25) or the bearing foot (23) to be longitudinally adjustable.

5. Coupling according to one of claims 1 to 4,
**characterised in that** the coupling (21) is part of an electric drive unit with a rotary and linear actuator for the air-bearing sleeve (15), which has means for gripping a positionable workpiece on its other end.

6. Coupling according to claim 5,
**characterised in that** the sleeve (15) has means for fastening a thin coaxial lift rod (15?) and that the drive shaft (20) is configured as a hollow shaft, through which the lift rod (34) can be passed.

7. Coupling according to one of the preceding claims,
**characterised in that** the flexure joint (27) has a central through hole for supplying the bearing foot (23) with compressed gas.

8. Coupling according to one of the preceding claims,
**characterised in that** in addition to the flexure joint (27) outside the bearing axis a spring (30) is attached to the bearing foot (23), which is tiltable in all directions, the attachment point of said spring being deflectable perpendicularly to the bearing surface (28) and non-deflectable in the peripheral direction of the bearing foot (23).

9. Coupling according to one of the preceding claims,
**characterised in that** the flexure joint is formed by a support pin (27), which extends parallel to the bearing axis and is anchored in fixed bearings of the holder (22) and the bearing foot (23), and that a free section is formed flexibly between the fixed bearings.

10. Coupling according to claim 9,
**characterised in that** at least one of the fixed bearings has a clamping bore in the holder (22) or in the bearing foot (23), in which the cylindrical support pin (27) is inserted and clamped to be longitudinally adjustable.

11. Coupling according to claim 9,
**characterised in that** the bearing foot (23) is provided with means for the permanent magnetic clamping its bearing surface (28) to a complementary running surface (29) of a guide path.

12. Drive unit with a rotary and linear actuator, in particular for handling electrical components, with
• a housing (13),
• a sleeve (15), which is rotationally operated by a rotary drive (18) and operated in a translatory manner by a linear drive (17) and is mounted by air bearing in the housing (13), wherein the sleeve (15) is connected to a rotor (19) of the linear drive (17) by means of a lift rod (34),
**characterised in that**
• a drive shaft (20) of the rotary drive (18) is connected to the sleeve (15) by means of a coupling (21), which is configured in accordance with one of the preceding claims.

## Revendications

1. Accouplement comprenant deux arbres approximativement coaxiaux, qui sont reliés l'un à l'autre au moyen de l'accouplement de façon solidaire en rotation et capables de translation axiale l'un par rapport à l'autre, ledit accouplement comprenant un palier aérostatique avec un pied de palier (23), qui présente du côté frontal une surface de palier plane (28) avec un axe de palier médian perpendiculaire à celle-ci, et qui est monté du côté dorsal via un palier de soutien sur un support (22) du palier avec possibilité de basculement,
**caractérisé en ce que**
- le palier de soutien agencé au voisinage de l'axe de palier est réalisé sous la forme d'une articulation à corps solide (27),
- le support, réalisé sous forme d'élément d'entraînement (22) est associé de manière fixe à l'un des deux arbres,
- la surface de palier plane (28) du pied de palier (23) s'étend parallèlement à l'axe de rotation,
- l'autre arbre présente une surface de roulement (29) qui chevauche la surface de palier (28) et qui est adaptée à celle-ci, et
- l'articulation à corps solide est agencée à distance de l'axe de rotation de l'arbre.

2. Accouplement selon la revendication 1,
**caractérisé en ce que** l'un des arbres est réalisé comme un arbre d'entraînement (20) qui n'est pas capable de translation axiale, sur lequel l'élément d'entraînement (22) est fixé à une extrémité frontale, ledit élément d'entraînement dépassant par une branche (26) dans la direction de l'autre arbre et portant le pied de palier (23), et
**en ce que** l'autre arbre est réalisé sous la forme d'un fourreau (15) capable de translation axiale, qui comporte une griffe (24) agencée du côté frontal et dépassant en direction de l'arbre d'entraînement (20), sur laquelle est réalisée la surface de roulement (29).

3. Accouplement selon la revendication 2,
**caractérisé en ce que** l'élément d'entraînement (22) comprend un manchon (25) enfilé sur l'extrémité de l'arbre d'entraînement (20) et une tige de soutien (27) pour le pied de palier (23), à l'extrémité libre de sa branche,
**en ce que** le pied de palier (23) présente par rapport au manchon (25) une distance libre dans la direction de translation, et
**en ce que** le ressort de flexion est réalisé sous la forme d'une tige mince (30) parallèle à l'axe de rotation de l'arbre d'entraînement (20), laquelle est reliée fermement au manchon (25) et au pied de palier (23).

4. Accouplement selon la revendication 3,
**caractérisé en ce que** la tige rectiligne (30) à section ronde est fermement coincée par l'une au moins de ses extrémités avec possibilité de translation longitudinale dans un perçage du manchon (25) ou du pied de palier (23).

5. Accouplement selon l'une des revendications 1 à 4,
**caractérisé en ce que** l'accouplement (21) fait partie d'une unité d'entraînement électrique avec un entraînement de rotation/translation pour le fourreau (15) monté sur palier à air, lequel comporte à son autre extrémité des moyens pour agripper une pièce à oeuvrer susceptible d'être positionnée.

6. Accouplement selon la revendication 5,
**caractérisé en ce que** le fourreau comporte des moyens pour la fixation d'un poussoir mince coaxial (15), et **en ce que** l'arbre d'entraînement (20) est réalisé sous forme d'arbre creux à travers lequel peut être passé le poussoir (34).

7. Accouplement selon l'une des revendications précédentes,
**caractérisé en ce que** l'articulation à corps solide (27) comporte un perçage traversant central pour l'alimentation du pied de palier (23) avec un gaz sous pression.

8. Accouplement selon l'une des revendications précédentes,
**caractérisé en ce que**, en supplément à l'articulation à corps solide (27), un ressort de flexion (30) est appliqué à l'extérieur de l'axe de palier sur le pied de palier (23) capable de basculer dans tous les sens, dont l'emplacement d'application est susceptible d'être dévié perpendiculairement à la surface de palier (28), mais n'est pas susceptible d'être dévié dans la direction circonférentielle du pied de palier (23).

9. Accouplement selon l'une des revendications précédentes,
**caractérisé en ce que** l'articulation à corps solide est formée par une tige de soutien (27) qui s'étend parallèlement à l'axe de palier et qui est ancrée dans de palier fixe du support (22) et du pied de palier (23), et **en ce qu'**un tronçon libre entre les paliers fixes est réalisé de manière élastique en flexion.

10. Accouplement selon la revendication 9,
**caractérisé en ce que** l'un au moins des paliers fixes comporte un perçage de coincement dans le support (22) ou dans le pied de palier (23), dans lequel la tige de soutien cylindrique (27) est mise en place avec possibilité de translation longitudinale et fermement coincée.

11. Accouplement selon la revendication 9,
**caractérisé en ce que** le pied de palier (23) est pourvu de moyens pour assurer un serrage magnétique permanent de sa surface de palier (28) avec une surface de roulement complémentaire (29) d'une piste de guidage.

12. Unité d'entraînement avec un entraînement de rotation/translation, en particulier pour la manutention d'éléments structurels électriques, comprenant
- un boîtier (13),
- un fourreau (15) actionné en rotation par un entraînement de rotation (18) et actionné en translation par un entraînement linéaire (17), le fourreau étant monté dans le boîtier (13) via un palier à air, et le fourreau (15) est relié à un élément mobile (19) de l'entraînement linéaire (17) via un poussoir (34),
**caractérisé en ce que**
- un arbre d'entraînement (20) de l'entraînement de rotation (18) est relié avec le fourreau (15) via un accouplement (21) qui est réalisé selon l'une des revendications précédentes.
